# EUROPEAN PATENT APPLICATION

(11) **EP 3 550 808 A1**
(43) Date of publication of application: **09.10.2019**
(21) Application number: 19166373.1
(22) Date of filing: 02.02.2016
(51) Int. Cl.: H04M 1/02, G06F 1/16, A44C 5/10, G04G 19/00, G04B 37/14, G04B 47/00, G06F 1/18, H04B 1/3827, H04M 1/727, H02J 7/14, H04M 1/725

(54) **MODULAR WEARABLE SMART BAND WITH INTERCHANGEABLE FUNCTIONAL UNITS**

(30) Priority: 02.02.2015 UA 201500778; 17.02.2015 US 201562117180 P; 29.05.2015 US 201562167976 P; 31.12.2015 US 201562273956 P; 31.12.2015 US 201562274030 P
(62) Divisional of application: 16702917.2
(71) Applicant: Blocks Wearables Ltd., London W2 3BW (GB)
(72) Inventor: TAHMASEBZADEH, Alireza, Londin, Greater London W2 3BW (GB); ELFAKIR, Omer, London, greater London W2 3BW (GB); VASYLECHKO, Serhiy, London, greater London W2 3BW (GB); KANE, Marcus, London, Greater London W2 3BW (GB)
(74) Representative: Betten & Resch

(57) **Abstract**

Modular smart band can include a plurality of coupled modules. The plurality of modules can include at least one core module having at least one processor and at least one peripheral module. Each of the plurality of modules has a coupler end and a receiving end disposed on opposing ends of the module, the coupler end configured to be received in the receiving end of an adjacent module. At least one of the plurality of modules can include a display and at least one the plurality of modules includes a battery.

## Description

### CROSS REFERENCE TO RELATED APPLICATIONS

This application claims priority to Ukraine Application No. a 2015 00778, filed February 2, 2015, U.S. Provisional Application No. 62/210,927, filed February 26, 2015, U.S. Provisional Application No. 62/167,976 filed May 29, 2015, U.S. Provisional Application No. 62/273,956 filed December 31, 2015, and U.S. Provisional Application No. 62/274,030 filed December 31, 2015, the contents of which are entirely incorporated by reference herein.

### FIELD

This invention relates, generally, to modular electronic devices, and particularly to wearable modular smart band devices which include a multitude of functioning or non-functioning units, or modules, which can be both electrically and mechanically connected together to form a smart device.

### BACKGROUND

Known smart watches provide users the ability to interact with and engage a personal electronic device, such as a cell phone or tablet. The smart watch provides a captive feature set that cannot be expanded, upgraded, or changed and does not allow customization on a daily or weekly basis.

### SUMMARY

Modular electronic devices, such as modular smart band devices, are disclosed herein. Such a device can be used in combination with or independent of a smartphone and can be worn on the wrist and other parts of the body. For example it could also be configured to be placed on the forearm, ankle or neck. In some instances, the modular smart band can be configured to be attached to a backpack, luggage, or article of clothing.

A modular smart band can include a plurality of coupled modules. The plurality of modules can include at least one core module having at least one processor and/or at least one peripheral module. Each of the plurality of modules has a coupler end and a receiving end disposed on opposing ends of the module, the coupler end configured to be received in the receiving end of an adjacent module. At least one of the plurality of modules can include a display and at least one of the plurality of modules can include a battery.

Each of the plurality of modules can receive a removable outer facia. The plurality of modules can include a core module, and two or more peripheral modules each coupled one to the other forming a continuous loop smart band device. At least one core module can includes a touch sensitive display. At least one peripheral module can have a battery configured to supply electrical power to at least one core module and/or at least one peripheral module. The battery can be coupled to a kinetic energy generator configured to be charged by the kinetic energy generator. The plurality of modules can include wireless communication configured to be coupled to an electronic device.

A modular smart band can have a plurality of communicatively coupled modules and the plurality of modules can include at least one module having at least one processor. Each of the plurality of modules can have a first end and a second end disposed on opposing ends. The first end configured to couple with the second end of an adjacent module.

The plurality of modules can have at least one core module and at least one peripheral module and the core module can have a processor and a display. At least one core module can have a first size and at least one peripheral module can have a second size, the first size being larger than the second size. Each of the plurality of modules can receive a removable outer facia.

The plurality of modules are coupleable by snap connection, the first end having a protrusion configured to snap fit into a groove formed on the second end of an adjacent module. The plurality of modules can be coupleable by a sliding connection. The first end can have a protrusion configured for sliding engagement with a correspondingly shaped groove formed on the second end. The plurality of modules can be coupleable by a pin disposed on the first end and an aperture formed on the second end configured to receive and engage the pin.

The plurality of modules can be electrically coupled by a first electrode disposed at one of the opposing ends and a second electrode at the other of the opposing ends of an adjacent module. The first electrode configured to abuttingly engage the second electrode, thereby electrically coupling between the plurality of modules.

### BRIEF DESCRIPTION OF THE DRAWINGS

FIG. 1 is an isometric view of an example embodiment of a modular smart band device having plurality of modules coupleable with a jack and socket connector;
FIG. 2 is an isometric view of an example first embodiment of a modular smart band device having a plurality of modules coupleable with retractable pins;
FIG. 3 is an isometric view of an example second embodiment of a modular smart band device having a plurality of modules coupleable with retractable pins;
FIG. 4 is an isometric view of an example first embodiment of a modular smart band device having a plurality of modules coupleable with a securing pin;
FIG. 5 is an isometric view of an example second embodiment of a modular smart band device having a plurality of modules coupleable with a securing pin;
FIG. 6 is an isometric view of an example first embodiment of a modular smart band device having a plurality of modules coupleable with a USB type connector;
FIG. 7A is an isometric view of an example second embodiment of a modular smart band device having a plurality of modules coupleable with a USB type connector;
FIG. 7B is an isometric view of an example embodiment of a modular smart band device having a plurality of modules coupleable with a rotating electrical element;
FIG. 8 is a top isometric view of an example embodiment of a module coupling arrangement;
FIG. 9 is a bottom isometric view of an example embodiment of a module coupling arrangement;
FIG. 10 is an isometric view of an example embodiment of a module coupling arrangement;
FIG. 11 is an isometric view of an example embodiment of a modular smart band device having a flexible element;
FIG. 12 is an isometric view of an example embodiment of a connector for a modular smart band device;
FIG. 13 is an isometric view of an example embodiment of a modular smart band device clasp module;
FIG. 14 is an isometric view of an example embodiment of a module of a modular smart band device;
FIG. 15 is an isometric view of the module of FIG. 14 coupled with a second module;
FIG. 16 is a detailed view of section A-A of FIG. 15;
FIG. 17 is a top view of the module of FIG. 14;
FIG. 18 is an isometric view of an example second embodiment of a module of a modular smart band device;
FIG. 19 is an isometric view of the module of FIG. 18 coupled with a second module;
FIG. 20 is an isometric view of an example third embodiment of a module of a modular smart band device;
FIG. 21 is an isometric view of the module of FIG. 20 coupling with a second module;
FIG. 22 is an isometric view of the module of FIG. 20 coupled with a second module;
FIG. 23A is an isometric view of an example flat module of a modular smart band device;
FIG. 23B is an isometric view of an example curved module of a modular smart band device;
FIG. 24A is an isometric view of an example small module of a modular smart band device;
FIG. 24B is an isometric view of an example medium module of a modular smart band device;
FIG. 24C is an isometric view of an example large module of a modular smart band device;
FIG. 25 is an isometric view of an example embodiment of a removable facia;
FIG. 26A is an isometric view of an example embodiment of a module having a biometric sensor disposed on the bottom surface;
FIG. 26B is an isometric view of an example embodiment of a removable facia having a sensor disposed on the top surface;
FIG. 26C is an isometric view of an example embodiment of a removable facia having a button disposed on the top surface;
FIG. 27 is an exploded view of an example embodiment of a module and an removable facia;
FIG. 28 is a partially assembled view of an example embodiment of a module and removable facia;
FIG. 29 is an assembled view of a second example embodiment of a module and removable facia;
FIG. 30 is an exploded view of a second example embodiment of a module and removable facia;
FIG. 31 is isometric view of an example embodiment of a removable facia having a display;
FIG. 32A is an isometric view of an example embodiment of a core module;
FIG. 32B is an isometric view of an example second embodiment of a core module;
FIG. 32C is an isometric view of an example third embodiment of a core module;
FIG. 33 is a top view of an example embodiment of a modular smart band device having a plurality of modules including a core module and peripheral modules;
FIG. 34 is a top view of an example second embodiment of a modular smart band device having a plurality of modules including a core module and peripheral modules;
FIG. 35 is a top view of an example third embodiment of a modular smart band device having a plurality of modules including a core module and peripheral modules;
FIG. 36 is an isometric view of an example third embodiment of a module of a modular smart band device; and
FIG. 37 is an isometric view of the module of FIG. 36 coupling with a second module.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature being described. The drawings are not necessarily to scale and the proportions of certain parts may be exaggerated to better illustrate details and features. The following description is not to be considered as limiting the scope of the embodiments described herein.

A few definitions relating to the following disclosure are presented below.

The term "static" is defined as lacking in movement, action, or change. The term "dynamic" is defined as allowing movement, action, or change. The term "coupled" is defined as connected, whether directly or indirectly through intervening components, and is not necessarily limited to physical connections. The connection can be such that the objects are permanently connected or releasably connected. The term "substantially" is defined to be essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like

While the following description is described with respect to functional units that form the modular smart device categorized into core and peripheral modules, both types of module can utilize similar technology to achieve the modular design, but house different components as will be described in subsequent sections of this document.

The modular smart band device can implement a core module coupled with one or more peripheral modules, a plurality of peripheral modules, two core modules coupled with a plurality of peripheral modules, or any combination thereof.

The male and female ports contain electronic pathways to transmit power and data as well as provide a mechanism to enable modules to be connected and disconnected to other modules. The device can be assembled in a closed loop configuration or can be assembled in an open loop configuration.

The modules can be water resistant, and the connection between two modules can be designed to prevent water and/or other contaminants from making contact with the live terminals of the male and female ports. Water resistance in the module can be achieved by using hydrophobic nanocoatings on the electronic components. Water resistance can also be achieved by use of a gasket or other mechanical seal compressed between the two halves of the casing. Water resistance in the connection between two modules can be achieved by use of annular or cylindrical seals on the male and/or female port that ensure that no water and/or other contaminants enter the connection, or that if they do enter, the terminals of the connections remain isolated by an assembly of seals. The use of a locking mechanism between two modules compresses the seals and keeps them effective. When disconnected, modules need to be kept away from water and other contaminants, and cleaned and dried if contact has been made. Protective containers are available for storing unused modules.

The module can be made of a single or multiple materials, the choice of which ensures sufficient strength and avoids interference with the electronic components. The material can be a polymer such as polycarbonate or ABS. The material may be a metal such as an aluminium or titanium alloy. Use of multiple materials in a module would allow metallic materials to be used that are nonadjacent to the electronic components. The material used is non-allergenic and can be lightweight. The material is machinable or formable, and has sufficient strength such that the smart band can endure normal usage without breaking. The material can be non-porous, water resistant and able to survive in normal environmental conditions. The module may come in a variety of finishes and colours that the user can select. The finish can be textured, matte or polished, and come in a single or multiple colours. Modules can have decals printed on their surface or have etched markings.

Individual modules can achieve various functionalities and include hardware such as an LED light, or a complex internal structure such as that for a Global System for Mobile Communications (GSM) module for mobile communications. Modular devices allow personalization when buying the device, and the ability to upgrade the device only by adding or replacing modules without the need to replace the whole device. Individual modules can also be added, removed, replaced, or substituted depending on a user's preference or activity.

The peripheral modules can include, but are not limited to, a heart rate (HR) monitor, one or more accelerometers, one or more batteries, one or more microphones, one or more cameras, one or more kinetic chargers, one or more temperature sensors, one or more radiotelephony components, Bluetooth, Wireless Fidelity (WiFi), cellular communication such as GSM, and/or Global Positioning System (GPS).

Depending on the electronic component contained within the module, slight modifications to the module design may be required e.g. a heart rate (HR) monitor requires a line of site to the user's skin. Empty peripheral modules are also available for developers to experiment with that do not contain electronic components. Empty peripheral modules can also be provided for spacing within a smart band device when only a limited number of active peripheral modules are desired to conserve battery life. The empty peripheral modules can act as pass through modules allowing communicative coupling therethrough.

Modules can be interchanged at any time, enabling a smart device that can evolve with a user's changing needs, and also rapidly advancing technologies. The clasp can have the same appearance as the other peripheral modules, provide a certain level of size adjustability, and secure the device to the user's wrist. The user is able to add to the assembly of modules or replace any of them while the device is operating.

The modules can allow a user to choose the sensors they need in an electronic device at time of sale. Secondly, a user can replace and add modules as the new technology becomes available, as their interests and activities change, or as additional resources become available. The appearance of the modules can also be personalized through the shells.

In at least one embodiment, developer peripheral modules can also be available in an open hardware platform, for the developer community to experiment with their own ideas. An SDK and MDK can be provided for them to produce their own modules.

The design of each module can be such that the top fascia or shell is installed permanently or can be assembled by the user which would ensure an open-design approach where the user is able to choose and replace the look of the device on the go.

The present disclosure is shown utilizing a hardware casing with a male and a female port that enable both a mechanical and electrical connection to be attained between modules. However, it is within the scope of this disclosure for a hardware casing to include two male ports or two female ports and be configured to mechanically and electrically connect adjacent modules.

Extra locking mechanisms to ensure a strong connection between modules may also be used. Each module can contain a first port on one end and a second port on the opposing end that is compatible with the first port. Different types of ports can be used within the modules. A modular device in accordance with various embodiments can have the modules themselves comprise the entirety of the device, where there is no underlying base or strap for attaching the modules to. The electrical transmission and mechanical rigidity can be achieved by the connection ports between the modules.

### PERIPHERAL MODULES

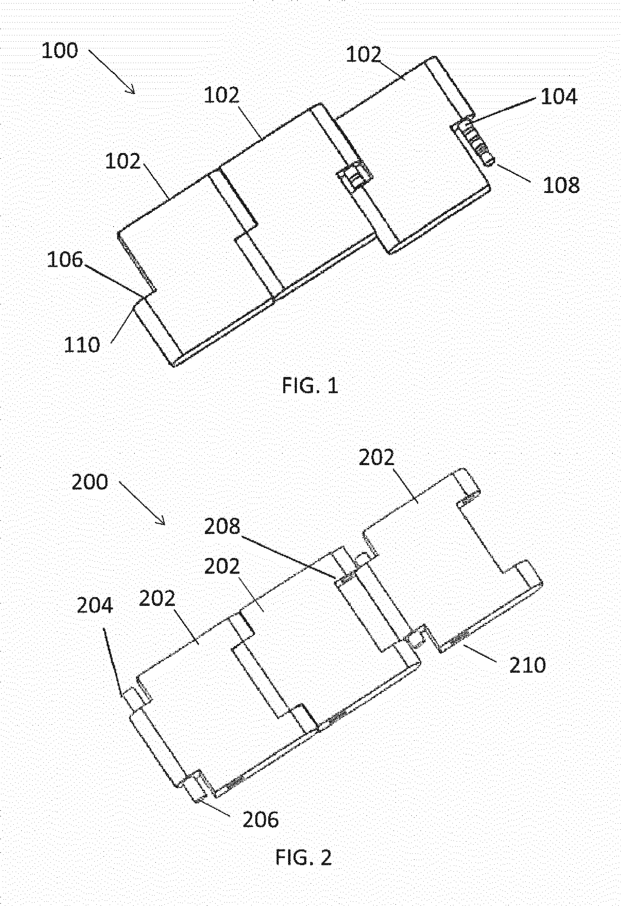

FIGS. 1-13 present various example embodiments of peripheral modules and their related coupling to form a smart band device. The smart band device can be formed by a plurality of peripheral modules in an open loop or continuous loop arrangement.

FIG. 1 illustrates an example embodiment of a plurality modules 102. Each of the plurality of modules 102 can be coupled with an adjacent module forming a smart band device 100. The module 102 can have a first port 104 on one end and a second port 106 disposed on an opposing end. The first port 104 can be a co-axial jack 108 as a male port and the second port 106 can be a counterpart socket 110 as a female port. By aligning the centrelines of the first port 104 from one module 102 with the second port from an adjacent module 102, and bringing both modules 102 together and inserting the first port 104 into the second port 106, coupling is achieved. The coupling can provide electrical communication between each module while also providing mechanical securement.

The use of a co-axial connector also allows the modules 102 to rotate about the centreline of the first and second port 104 and 106. When multiple modules 102 are coupled together, the assembled modules can be closed around a user's wrist, forearm, or other parts of the body, and can be secured with a clasp (described later), in the form of a closed loop band.

FIG. 2 illustrates an example second embodiment of a plurality of modules 202. A smart band 200 can include a plurality of modules 202 having retractable shafts 204. The tips 206 of the shafts transmit power and data as well as maintain the mechanical structure of the connection, by insertion into the aligning female port 208. The shafts 204 can be a first port and the female port 208 can be a second port.

The shafts 204 can be retracted and released by actuation of a push button mechanism 210. Depressing the push button mechanism 210 can withdraw the tips 206 from the adjacent module 202 female port 208 and allow decoupling of two modules. Depressing the push button mechanism 210 can also allow coupling of two adjacent modules 202 by withdrawing the tips 206 to align the female port 208 and the shaft 204. Thereafter, once the female port 208 and the shaft 204 are aligned, the push button mechanism can be released so as to allow the tips 206 to extend into the female port 208 and couple the modules 202 together.

The shaft 204 can be spring loaded and can have various numbers of electrodes or electrical contacts based on the desired use. The modules 202 can rotate about the shaft 204 centreline.

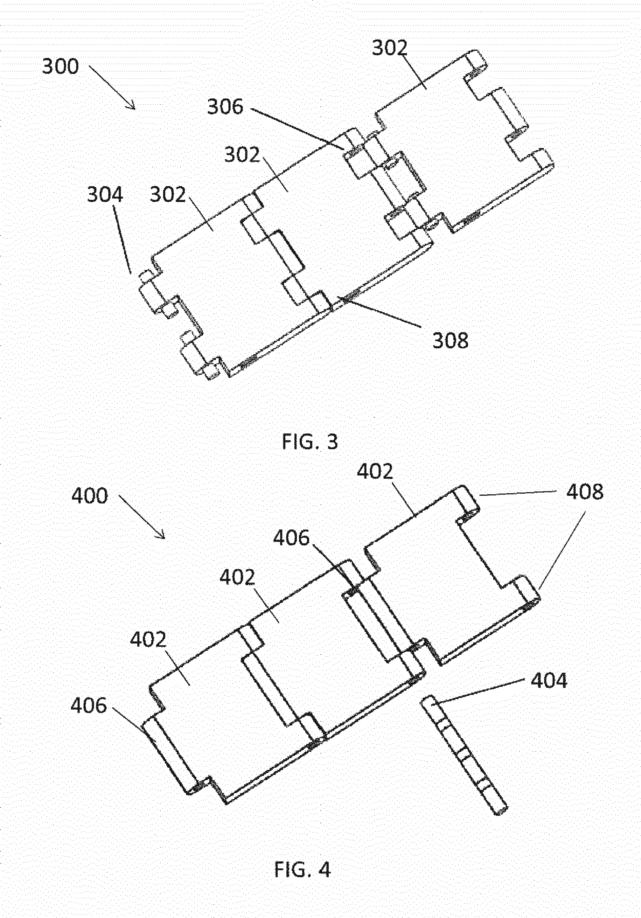

FIG. 3 illustrates an example third embodiment of a plurality of modules 302. The smart band 300 can include a plurality of modules 302 having a plurality of retractable shafts 304 and aligning female ports 306. The plurality of retractable shafts 304 can be actuated by a push button mechanism 308 to allow coupling and decoupling of adjacent modules 302, similar to that described above with respect to FIG. 2.

FIG. 4 illustrates an example fourth embodiment of a plurality of modules 402. The smart band device 400 can have a plurality of modules 402 coupled together by a co-axial shaft 404. Each module 402 can have a center protrusion 406 extending from a first end and at least one edge protrusion 408 extending from the second end. Two adjacent modules 402 can be coupled by a co-axial shaft 404 that is inserted into a center protrusion 406 extending from a first end of one module 402 and at least one edge protrusion 408 extending from a second end of the adjacent module 402. The co-axial shaft 404 can thereby interlink modules from one side and secure the modules 402 mechanically. The shaft 404 can contain electrical poles that transmit power and data between two connected modules 402. The modules 402 can rotate about the shaft 404 centreline.

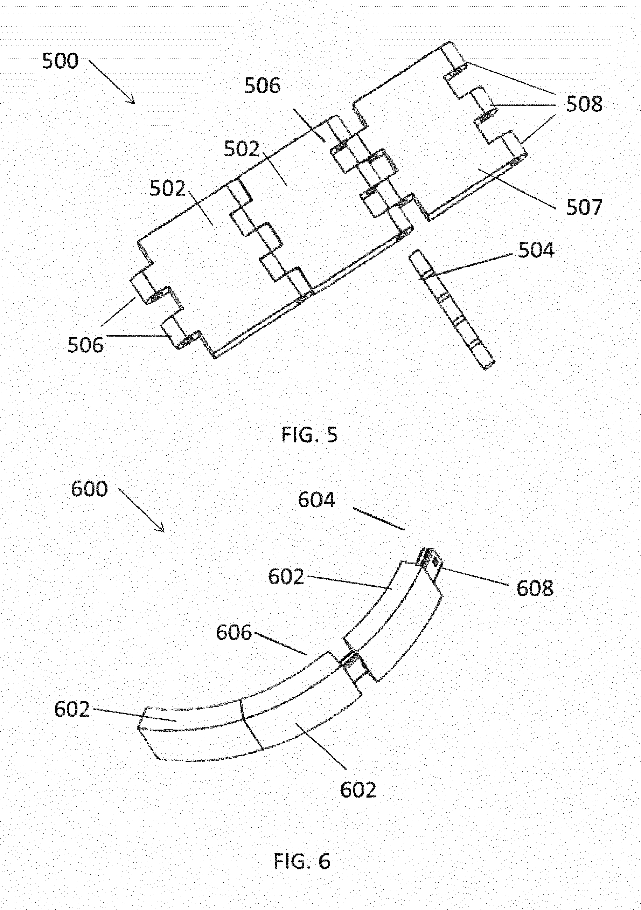

FIG. 5 illustrates an example fifth embodiment of a plurality of modules 502. A smart band 500 can have a plurality of modules 502 coupled together by a co-axial shaft 504. A first end can have two protrusions 506 and a second end can have three protrusions 508 configured to interlockingly engage the protrusions 506 of an adjacent first end. The coaxial shaft 504 can secure the first end of a module 502 with the second end of an adjacent module 502.

FIG. 6 illustrates an example sixth embodiment of a plurality of modules 602. The smart band 600 can have a plurality of modules 602 each having a male port 604 and a female port 606 disposed at opposing ends. The male connector 604 can include, but is not limited to, a micro-USB port 608. Male 604 and female 606 ports can be placed on different sides of the modules 602. The modules 602 can be static, but must be sufficiently small and curved to enable the user to wear it on their wrist.

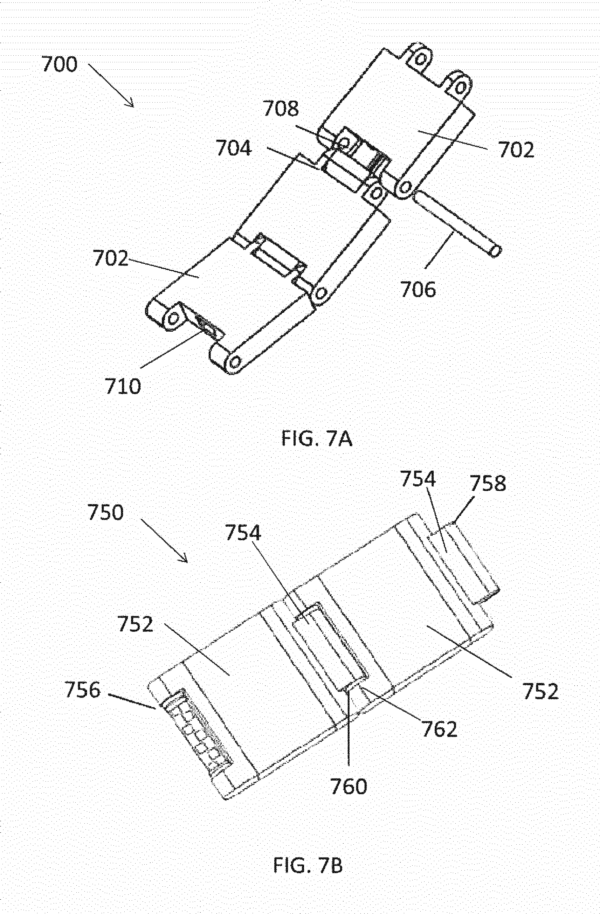

FIG. 7A illustrates a seventh embodiment of a smart band device 700. The modules 702 can be dynamic and able to rotate relative to a male port 708 if the male port 708 is placed on a pivotal member 704 with an additional pin 706 that secures the male port 708 and two modules 702 together. The male port 708 can be configured to be received in a corresponding female port 710 of an adjacent module 702.

The male port 708 can include 2, 3, 4, 5 or any number of electrical poles for power and data transmission. The electrical connection from the end of the pivotal member 704 to the electronic components within the module 702 can be via a flat cable or other type of flexible cable, thereby providing a water-proof device and the internal connections are not exposed to the outside environment. The modules can also be made dynamic by placing the female port 710 or the male port 708 on a pivotal member 704, or any combination therefore. The pivotal member 704 can also be built into the module 702, and not require an additional pin 706 for assembly.

FIG. 7B illustrates an eighth embodiment of a smart band device 750. The smart band device 750 can have two or more communicatively coupled modules 752. The module 752 can have a pivotal member 754 disposed on one end of the module 752 and have a plurality of electrical poles or electrodes, 758 and a static element on the other end with corresponding electrical poles or electrodes, 756. The pivotal member 754 and plurality of electrical poles 758 can be deflected relative to the module and allow range of motion when coupled with the static element and corresponding electrical poles 756 of an adjacent module. The range of motion provided by the pivotal member 754 allows the smart band device 750 to function when formed in a continuous loop or when substantially straight or any arrangement therebetween.

Alignment can occur by slotting the corresponding electrical poles 756 of one module 752 into the pivotal member 754 of an adjoining module 752. The corresponding electrical poles 756 on the static element can take the form of spring loaded contact pins, and on the pivotal member 754 can take the form of mating printed circuit board (PCB) pads. The PCB pads can be coupled with the other electronic components within the module via cables fed through a pin joint of the pivotal member 754, or by using compact slip rings between the pivotal member 754 and the module 752. A locking mechanism 760 between the rotating and static elements secures two modules 752 together, and a gasket 762 between them ensure water and contaminant resistance.

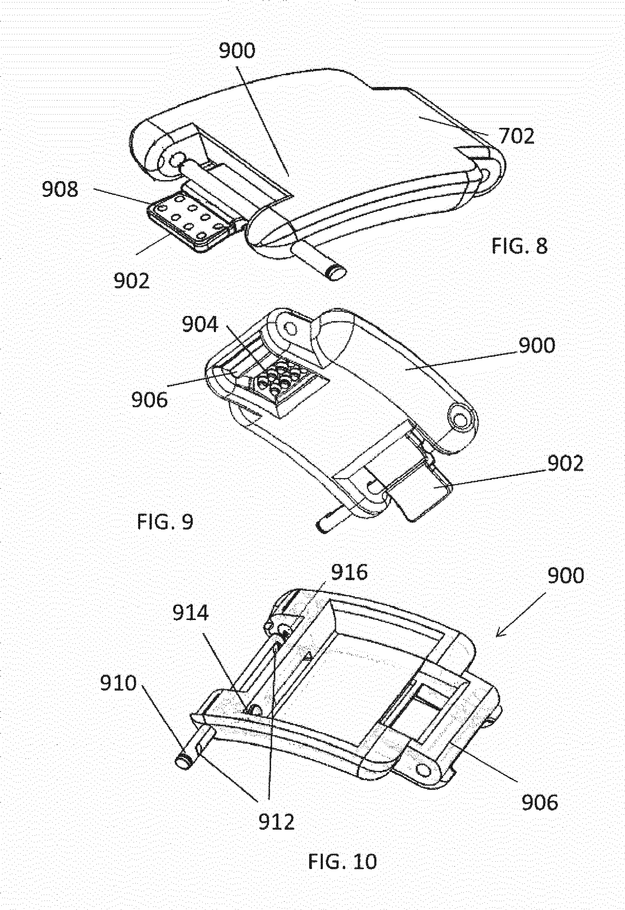

FIGS. 8-10 illustrate an example embodiment of a module 900. The electrical and mechanical connections can be isolated between modules into independent elements. The electrical connection composes a single or multi-layered flexible printed circuit (FPC) 902 extending out from one side of the module 900, which could also be overmoulded in a flexible polymer, and an array of spring loaded pins 904 on the opposing side of the module 900. The flexible circuit 902, or male port, can be pressed into the cavity 906, or female port, of an adjoining module 900, where the spring loaded pins 904 are located. The flexible circuit 902 contains circular (or otherwise) contact pads 908 that align with the spring loaded pins 904, which subsequently forms the electrical connection between adjacent modules 900.

The FPC 902 can also be a rigid flex circuit, where the part of the printed circuit containing the contact pads is rigid. The number of electrical poles, pins 904 and contact pads 908, on the male and female ports can be 2, 3, 4, 5 or any other number, that are used for data and/or power transmissions. The flexible male port enables the connection to be made while also allowing modules 900 to be rotated relative each other, by bending over an acceptable radius that does not damage the conductive tracks for the specified number of bending cycles for the lifetime of the smart band.

The FPC 902 can also take the form of flat flexible cables (FFCs) with the conductive leads exposed as required for connection with the spring loaded pins 904. The FFC can be connected to a rigid PCB that contains the contact pads 908. The connection between the module and rigid PCB can be achieved with FFCs or any other appropriate electrical connector. The flexible male and female ports can have a tapered shape such that the male port cannot be slid into the female port in a first direction, but can only be inserted from a second direction, to avoid the problem of non-aligning poles on the male and female ports making contact during insertion.

A press fit between the flexible polymer overmould of the male port and the female port can ensure that the male port does not become loose in operation, or a separate mechanism can hold the male port rigidly in place. The male port will be made easily removable to simplify module disassembly for the user. The flexible male port may also be a male micro-USB (or otherwise) or other similar male connector on a flexible arm that enables bending, which can be inserted into a female USB port of an adjoining module. The flexible arm of the male port may be fixed rigidly to the module, or be designed to retract into the module as two modules are rotated about each other.

The flexible arm can simply be a flat FPC, with creases applied as required, or the FPC can be designed as a coil or with a pantograph shape or any other geometry that enhances flexibility and degrees of freedom, such that during bending the stresses on the flexible arm are minimised.

As can be appreciated in FIG. 10, the mechanical connection of module 900 includes a captive pin mechanism 910. The captive metallic pin 910 (or other appropriate material with sufficient strength to meet expected loading) is designed with a flat section with two cavities 912 on either end, and is inserted into a slot in the module 900. Motion of the pin 910 is restricted to the length of the flat 916 by a spring plunger 914 built inside the module 900.

In the locked position, the captive pin 910 is pushed completely inside the module 900, and the spring-loaded ball bearing of the spring plunger 914 is released into the cavity at the end of the flat 916. To remove the pin, sufficient force can be exerted when pushing on it at one end, such that the ball bearing spring is compressed and the ball bearing is freed from the cavity 912, and can travel along the flat 916.

In the fully open position, the ball bearing reaches the other end of the flat 916 and extends into the cavity 912. In this position, an adjoining module can be lined up with the pin 910, which can then be inserted through the slots in both modules thus connecting them together mechanically. The captive mechanism prevents the pins 910 from becoming misplaced, but can be omitted by using a freely sliding pin for simplification. The pin can also be made to slot through the electrical connector if an appropriate mounting method is included, to hold it in place and prevent it from disconnecting easily. Removing the pin would therefore release both the electrical and mechanical connectors. Alternatively, in place of a full length pin, smaller retractable pins could also be used on both arms of the module, which can be released by a push-button mechanism.

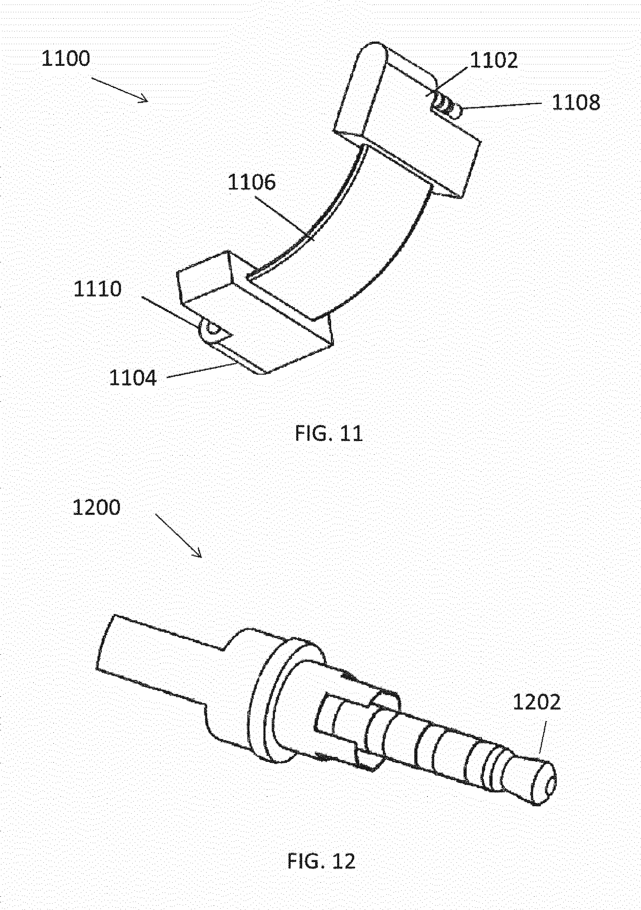

FIG. 11 illustrates a module 1100 having solid opposing end portions 1102, 1104 and a flexible center portion 1106. The flexible center portion 1106 can have a length of the size approaching other modules, or of any other length.

In at least one embodiment, a smart band device having the core module on top of the wrist and a peripheral module is on the bottom side of the wrist. The connection between the modules is a flexible material on the right hand side of the core module and a flexible material on the left hand side. The flexible connection does not act as an underlying strap or base, but is a part of the body of the device.

FIG. 12 illustrates a detailed view of a connector 1200 for a smart band device module. The modules can be secured together by the connection port 1202 and are able to transfer data, clock signals and power to one another. The connector port 1202 can have different numbers of poles. The electrical poles ensure the transmission of power and data between the modules. A multitude of different or same data transmission protocols can be used. As can be appreciated in FIGS. 1, 11, 13, 32A, 32B, and 32C, the connector 1200 can be disposed on the first end of a module. The connector 1200 can be disposed on either a first or second end of a module as shown in at least FIG. 1 and configured to be received in a corresponding port disposed on an adjacent module. The connector can provide mechanical and electrical coupling of adjacent modules. While, a cylindrical connector is shown and described with respect to FIG. 12, the modules can be communicatively coupled using any known detachable coupling means capable of transmitting data and power.

For example, in a 4-pole design, two poles can be used to transmit power and two poles can be used to transfer data in serial with protocols including but not limited to Inter-Integrated Circuit (I2C), Universal Asynchronous Receiver/Transmitter (UART), or USB.

In a 5-pole design, two poles can be used for power transmission and three poles for serial data transmission via serial data protocols such as but not limited to Serial Peripheral Interface (SPI). A 5-pole connection can also include two poles for power, two lines for a serial data transmission protocol and one line for analogue data transmission or as an interrupt or enable line.

A 6-pole connector can include two poles for power, and 4 poles for data transmission. The poles can be arranged in either a parallel protocol configuration or two distinct serial protocols. The connectors can have any number of poles based on the protocols that are being used. A multitude of serial, parallel or analogue data transmission methods may be used.

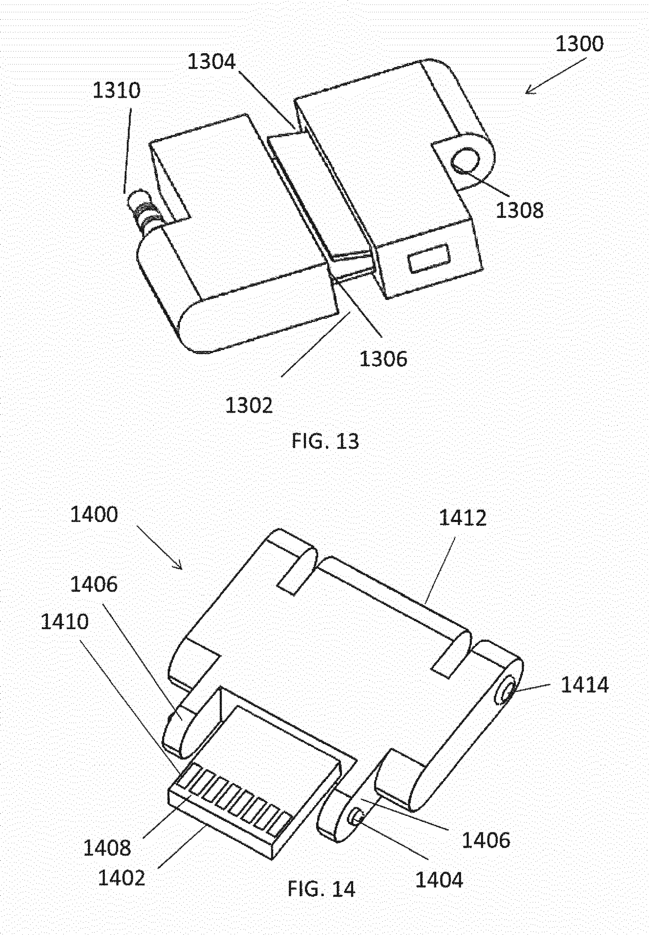

FIG. 13 illustrates an example embodiment of a clasp module 1300 having two parts. The plurality of modules can be formed into a continuous loop shape to allow securement to a user. To assist in securing and unsecuring the connected modules to the user's wrist, a clasp module 1300 can be used. A serial BUS can allow a discontinuity between the modules connected in a continuous loop to exist where a clasp 1302 is required. The clasp 1302 can therefore be a passive component with no electrical elements. The clasp module1300 can have a male port 1310 and a female port 1308, into which the male port 1310 of a module at one end of the device and the female port 1308 of a module on the other end of the device can be received, respectively. The clasp 1302 allows for size adjustments, and is also compatible with spacer modules, to provide a better fit of the device to the user's wrist.

The connection between the two parts of the clasp module 1300, required to secure the device to the user's wrist, can be achieved through several methods. The clasp 1302 can be of the box and tongue type, where one part of the clasp module 1300 contains a tongue 1306 and the other a groove 1304 into which the tongue 1306 is inserted. The clasp module 1300 can also be a fold over clasp, where a portion of the clasp 1302 is positioned over and locked to a post on the second portion of the clasp 1302.

In other embodiments, the clasp 1302 can also comprise of a latch on one part that is inserted laterally into the other part of the clasp. The clasp module 1300 can be based on existing mechanisms used in watches. To open the strap for some clasp types, a push button can be pressed, or the clasp may be separated with sufficient force. The clasp can also be comprised of two flexible straps that are received by the connector ports of the modules at each end of the device that can be fixed together using a pin or other mechanism. The material of the clasp can be machinable or formable, and has sufficient strength such that it can endure repeated loading and unloading during normal usage without breaking. The material can be non-porous, water resistant and able to survive in normal environmental conditions. The clasp may or may not have a similar appearance and be made of the same material as the other peripheral modules.

As each hardware module contains a built in male and female port, the number of parts is reduced, simplifying the experience for the user. There are also fewer electronic components that can potentially be misplaced or damaged. Good mechanical rigidity, sturdiness and water resistance is more attainable in the various embodiments of the invention. The module design can ensure that the connections between the modules that form a complete wearable device are synergetic, which prevents the modules from separating unless the clasp is opened.

### MODULE CONNECTION

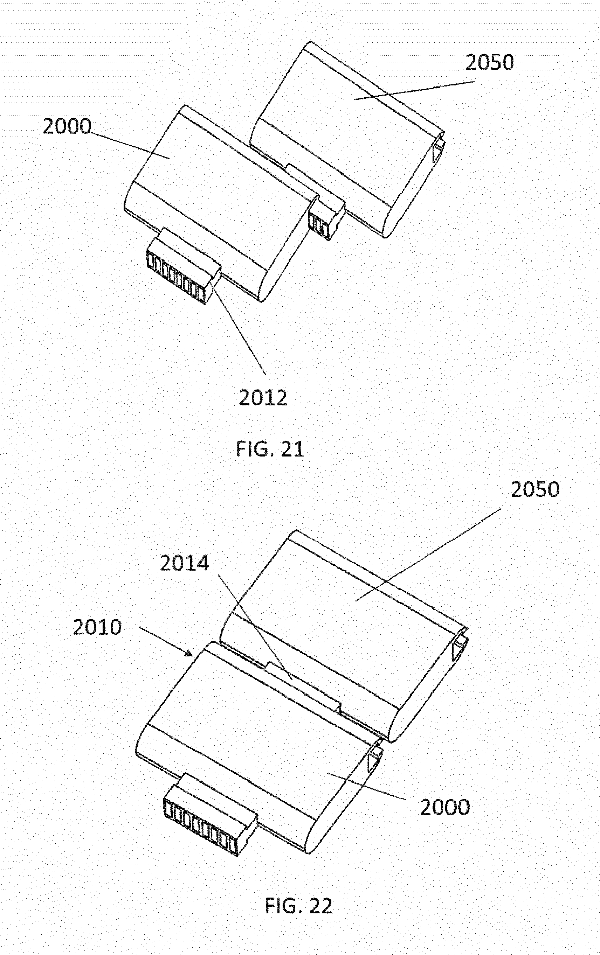

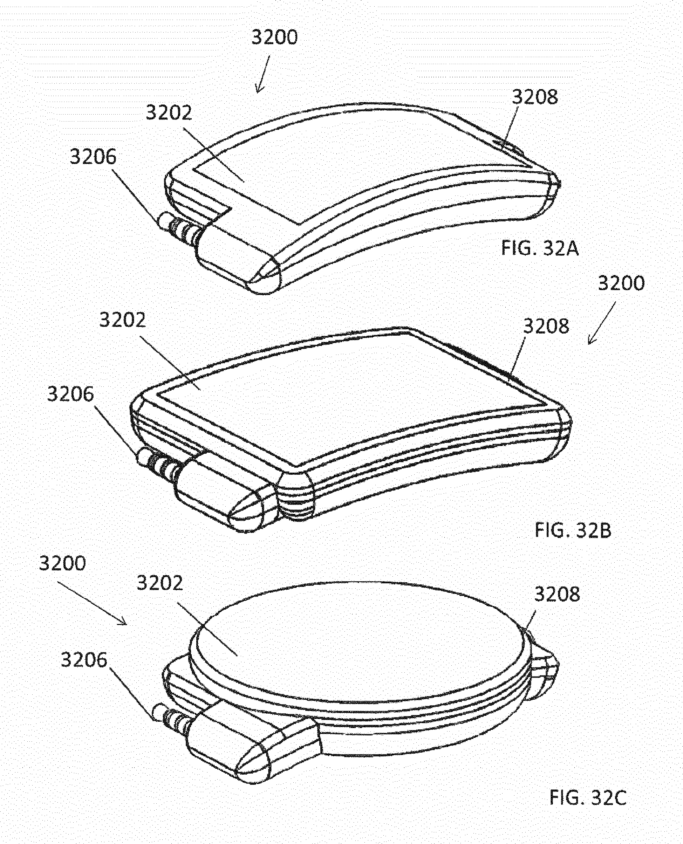

FIGS. 14-22 illustrate various embodiments of communicatively coupling a plurality of modules including peripheral modules and core modules (described below with respect to FIGS. 32A, 32B, and 32C). The communicative coupling amongst a plurality of modules allows modules to share features such as, data, processing power, battery, and display functionality. The communicative coupling is configured to allow modules to be coupled in any order or arrangement and be interchangeable amongst other modules.

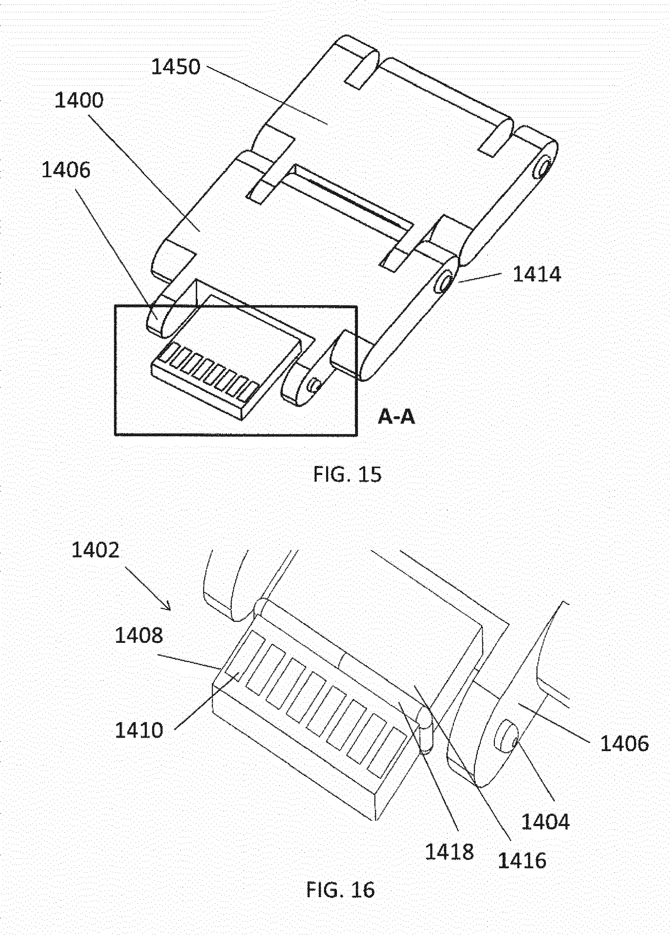

FIGS. 14-17 illustrate an example embodiment of a module 1400 and a module connector 1402 with independent mechanical and electrical connector elements. The module 1400 can include two spring-loaded pins 1404 built into two arms 1406 extending from the module casing 1400 configured to lock in cavities of an adjacent module 1450 (shown in FIG. 15). The electrical connector 1408 is composed of an overmoulded flexible printed circuit (FPC) with exposed contacts 1410 at its end that are configured to be received into a port 1412 on the same adjacent module 1450. A single connection action is required to couple two modules both mechanically and electrically.

In other embodiments, the module 1400 can also be designed in a way such that the arms have spring-biased button 1414 built in while the spring-loaded pins 1404 are built into the casing of the adjacent module 1450. In this embodiment, the arms 1406 can extend out from a first end of the module 1400 and are locked into a second end of the adjacent module 1450 by aligning the arms 1406 with the spring-loaded pins 1404 there.

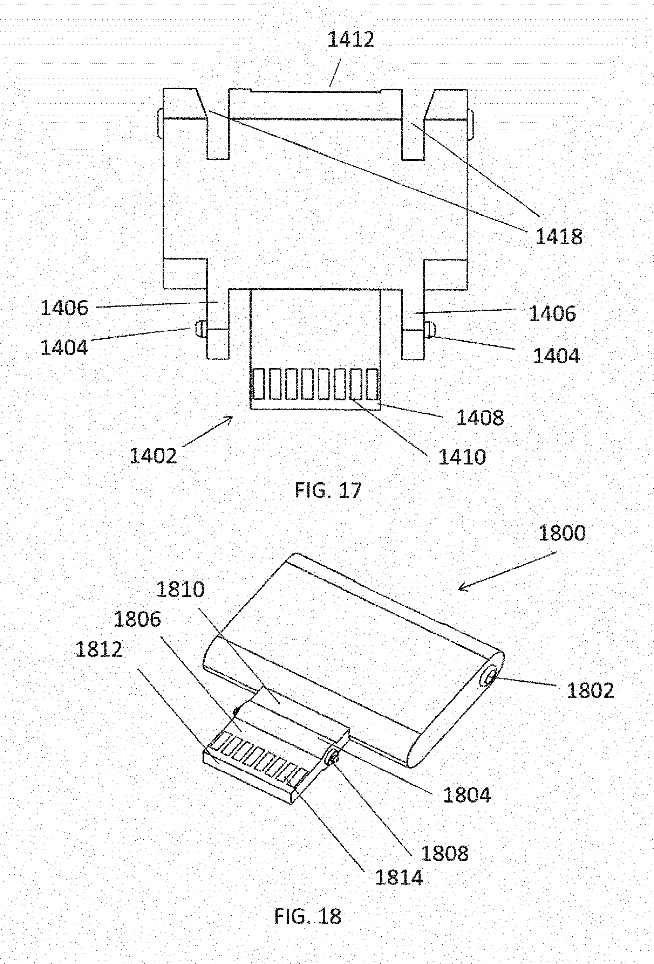

As can be appreciated in FIG. 17, the cavities 1418 into which the arms 1406 of the module 1400 are inserted can be tapered such that as the arms 1406 are inserted, the spring-loaded pins 1404 inside them are compressed.

Referring back to FIGS. 14-15, when in the locking position, the pins 1404 release into aligning holes within the cavity 1418, coupling and locking the two modules 1400, 1450. To release the modules, spring-loaded button 1414 on the outside of the module casing 1400 into which the arms 1406 were inserted are pressed, which actuates the pins 1404 in the arms, allowing the modules to be separated.

The mechanical coupling between the modules is able to support the loads during use and during any accidental occurrences (e.g. tensional or torsional forces as well as any impact loading, from snags or drops), while also enabling the modules to rotate about each other such that a chain of modules can be closed around the wrist. In at least one embodiment, the mechanical coupling can withstand at least approximately 60 Newtons (N) in tensional and 60 N in torsional forces. In at least one embodiment, the modules are able to rotate up to 80 degrees about each other. The range of motion can be restricted by a stopper in the mechanical connector to prevent the flexible electrical connector from being over stressed.

The electrical connector has a composite structure composed of a flexible section with rigid sections either side of it; one that is fixed at one side of the module 1400, and the other that extends out of the module and that can be inserted into a port on an adjacent module 1450. The fixed end is held in place using temporary fixings (e.g. fasteners, such as screws) or permanently attached (e.g. chemical bonding, such as adhesively or mechanical bonding, such as welding or molding), and connected electrically to the PCB in the module using, but not limited to, flat spring contacts mounted on the PCB that are aligned with contact pads on the connector. The exposed end 1402 that can be inserted into an adjacent module 1450 is also rigid, with exposed contact pads 1410 that can be inserted into a port on an adjacent module 1450, which make contact with flat spring contacts mounted on the PCB in that module that are capable of repeated loading through multiple connection and disconnection events. The contact pads 1410 in the rigid sections 1416 on both ends of the connector are bridged together using a FPC, and a flexible overmould is applied over this that also joins together and covers a section of the surface of the rigid sections.

As can be appreciated in FIG. 16, to seal the modules from water, dust and other contaminants, O-ring structures 1418 can be included in the overmould near the rigid sections 1416, which are compressed at the fixed end of the connector by the module casing 1400 and at the exposed end of the connector when it is inserted into the port of an adjacent module 1450. The electrical connector is can be a non-load bearing structure, and can deflect such that modules can close around a user's wrist, forearm, neck, or other body part.

In some embodiments, the connector can have a kink in its flexible section to facilitate bending, and a protrusion on its surface that is able to lock its position when inserted, to prevent any sliding when the modules are rotated about each other. The flexible section is able to withstand numerous cycles of bending without failure throughout the lifetime of the product.

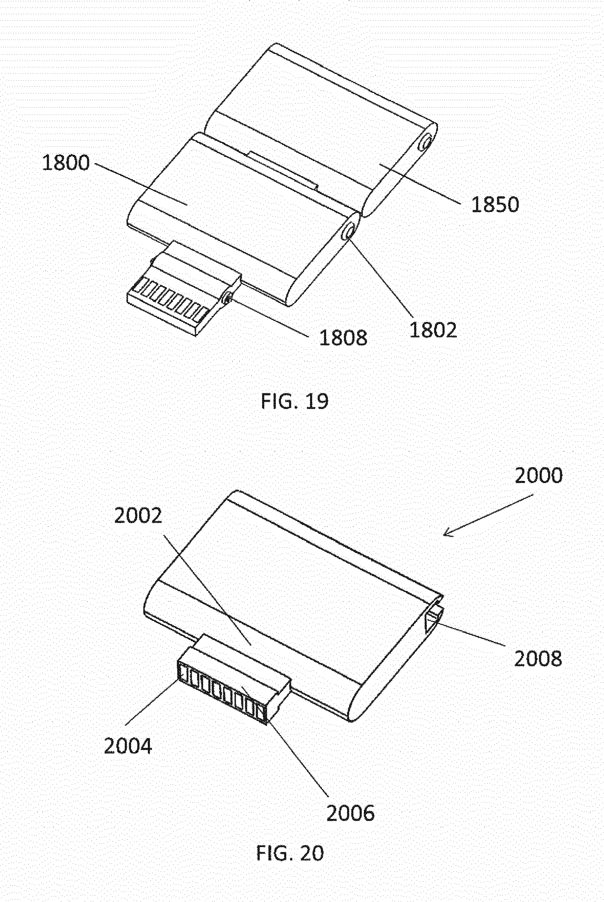

With respect to FIGS. 18 and 19, a module 1800 can have the mechanical and electrical connector elements combined into a single connector 1806, with a single action required for connection. The electrical element is composed of a FPC, while the mechanical element takes the form of a cylindrical spring bar 1804 that contains retractable pins 1808 at each end. The connector 1806 can have a flexible middle section 1810 and rigid sections 1812 either side of it with exposed contacts 1814. The contacts pads 1814 in the rigid sections 1812 are bridged together using the FPC. One end of the connector is fixed to one side of the module, using temporary fixings (e.g. fasteners, such as screws) or permanently attached (e.g. chemical bonding, such as adhesively or mechanical bonding, such as welding), and connected electrically to the PCB in the module using, but not limited to, flat spring contacts mounted on the PCB that are aligned with contact pads 1814 on the connector 1806. The connector 1806 configured to be inserted into the port on an adjacent module 1850 aligns with the flat spring contacts mounted on the PCB in that module, coupling them together electrically. The port end 1816 also contains the spring bar, which is built in to the rigid section 1812. The port in the adjacent module is tapered, such that when the connector is inserted, the pins in the spring bar are compressed, and then release when aligned with the holes in that module's casing, coupling them together mechanically. Spring-loaded buttons 1802 on the outside of the casing are pressed to push in the pins, such that the two modules 1800, 1850 can be separated again. The whole connector structure is required to be load bearing, while the flexible section allows the modules to bend about each other such that a chain of modules can be closed around the wrist.

FIGS. 20-22 illustrate a slidingly coupleable module 2000. The slidable module 2000 can achieve both a mechanical and electrical coupling and take the form of an overmoulded FPC with two rigid sections at each end. A first end 2002 would be fixed to the side of a module 2000 with a permanent electrical connection to the PCB in that module using, but not limited to, flat spring contacts mounted on the board that are aligned with contact pads 2004 on the connector 2006. The first end 2002 can have contacts 2004 on a rigid section 2006 that is connected to an adjacent module 2050 by slotting it into a groove 2008 of the adjacent module 2050.

A locking mechanism with a push button release 2010, as described above with respect to FIGS. 14-19, prevents the connector 2006 from being released if the modules 2000, 2050 are pulled apart parallel to the connection direction. The push button release 2010 can function using a J-slot, such that an initial inward force secures the connector and a second inward force releases the connector. The shape of the connector 2006 and groove 2008, or mating port, prevents both modules 2000, 2050 from being pulled apart, transverse to the connection direction, once they are connected. To achieve this, the connector 2006 can have, but it is not limited to, a T-shape 2012 or a teardrop shape. Once connected, the flexible section 2014 of the connector 2006 allows the modules to bend relative to each other, such that a chain of modules can be closed around the wrist, or similar body part. The entire connector 2006 can be load bearing and is able to sustain multiple connections and disconnections as well as bending cycles over the lifetime of the product.

Modules can contain a separate locking mechanism to prevent two connected modules from separating readily. As described above, the locking mechanism can be implemented directly between the male and the female port. Pushing the male port into the female port engages a latch, thus locking the male port in place. The lock can be released by pulling one module out from the other module with intermediate force or by pushing a release button.

The locking mechanism can also be engaged by a rotary mechanism, by inserting the male port of one module into the female port of another module, while both modules are perpendicular to each other, and turning one module by a specified angle. The two connected modules can still be rotated about the centreline of the connector over a limited angle range to enable the modular smart band to be closed around the user's wrist, or other body part. The locking mechanism can also have annular sleeves concentric to the male and female port that interlock via a spring loaded latch when two modules are connected together. The interlocking sleeves can seal the connection from water and/or other contaminants.

The locking mechanism can also be an external element built onto the module casing, such as a rotating flap on one module that folds over and locks onto the end of another. The flap configured to not restrict rotation of the modules when engaged, and can be released by lifting it with intermediate force.

The locking mechanism can also be a spring loaded latch that is external to the male and female port. As two modules are coupled together, the latch in one module can be engaged to secure the module connected to it. To separate the modules, a release button can be pressed. Use of external mechanisms can strengthen the coupling and prevent any loadings from localising at the male and female port.

### DESIGN CHARACTERISTICS

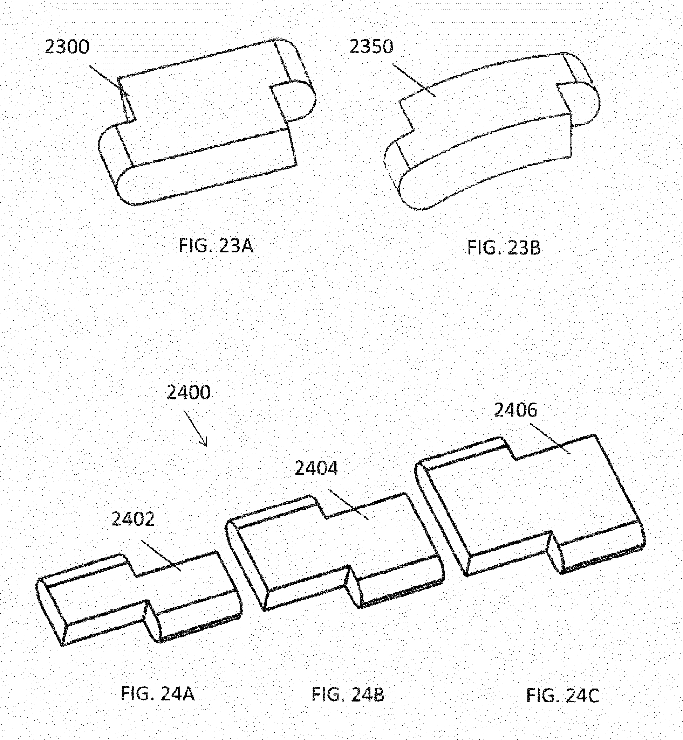

FIGS. 23 and 24 illustrate various design characteristics of modules relating to shape and size. The peripheral modules can be configured in any shape or size to facilitate coupling.

FIGS. 23A and FIG. 23B illustrate example modules 2300, 2350 having differing outer profiles. The design of the module can be flat 2300 or curved 2350 or flexible such that it can be both flat 2300 and curved 2350 depending on the environment and stress induced on the module. For a curved module, the geometry can be designed for ergonomics, to provide a comfortable fit for the user. The modules 2350 can be made of a flexible material such as rubber or silicon for more comfort.

The module 2300, 2350 can be made of multiple layered materials. The hardware inside the modules may be placed on a flat PCB or on a flexible PCB. It can have a constant cross-sectional area or one that varies along its length. The ends of the module where the male and female port can be located can be rounded to ensure that two connected modules can rotate about the axis of the connectors without restriction. Different modules can be of different curvatures. The other edges of the module may be filleted or chamfered to improve the aesthetics of the design.

FIGS. 24A, 24B, and 24C illustrate example spacer modules 2400. Various users can require different sized modules 2400 to accommodate a continuous loop around a body part. A smaller sized module would enable a user to achieve a better fit of the smart band device on their wrist. To improve the fit, spacer modules can be available in fractions of a full module e.g. quarter-sized 2402, half-sized 2404 and three-quarter-sized 2406, for the user to select appropriately. Spacer modules can utilize the same technology and contain electrical connections, such that they can be connected between any of the modules in the smart band device. Spacer modules can also form part of the clasp (FIG.13), in which case electrical connections would not be required within them, but they would still require a male and female port compatible with the connection type used in the other modules of the smart band device. In some embodiments, the spacer modules 2402, 2404, 2406 can be dummy modules acting as pass through modules. In other embodiments, the spacer modules 2402, 2404, 2406 can be functional modules having a battery, heart rate monitor, or other features.

### MODULE SHELL/FACIA

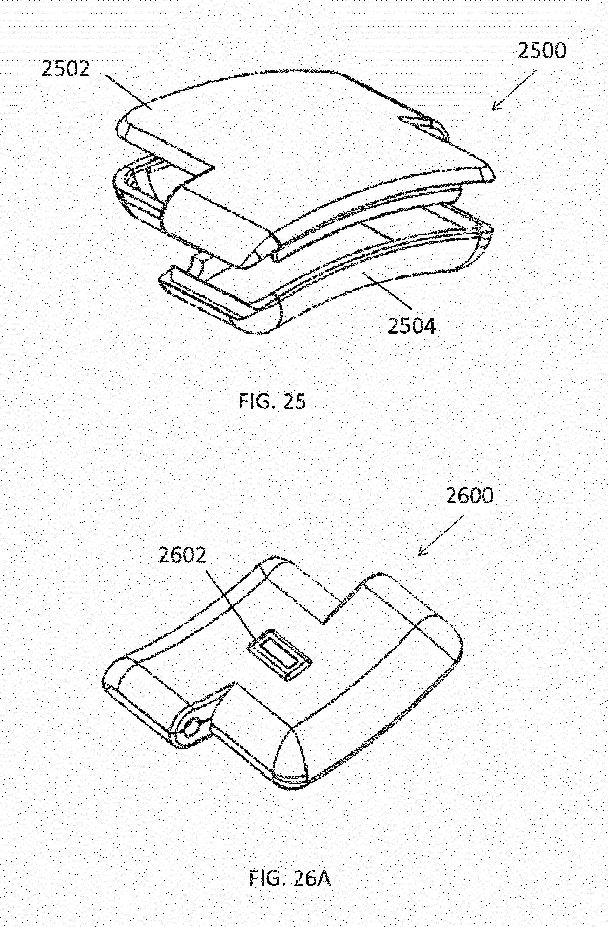

FIGS. 25-31 illustrate various embodiments of interchangeable shells, or facia, for modules. The interchangability of shells amongst the modules can allow users to vary the material, color, or overall appearance of a smart band depending on mood, clothing, appearance, weather or activity.

FIG. 25 illustrates an exploded view of module 2500. The module 2500 can be made of two parts 2502, 2504 configured to be assembled together using temporary fixings or fixed permanently using including, but not limited to, adhesives.

FIGS. 25-31 illustrate various embodiments of modules having interchangeable shells or facia.

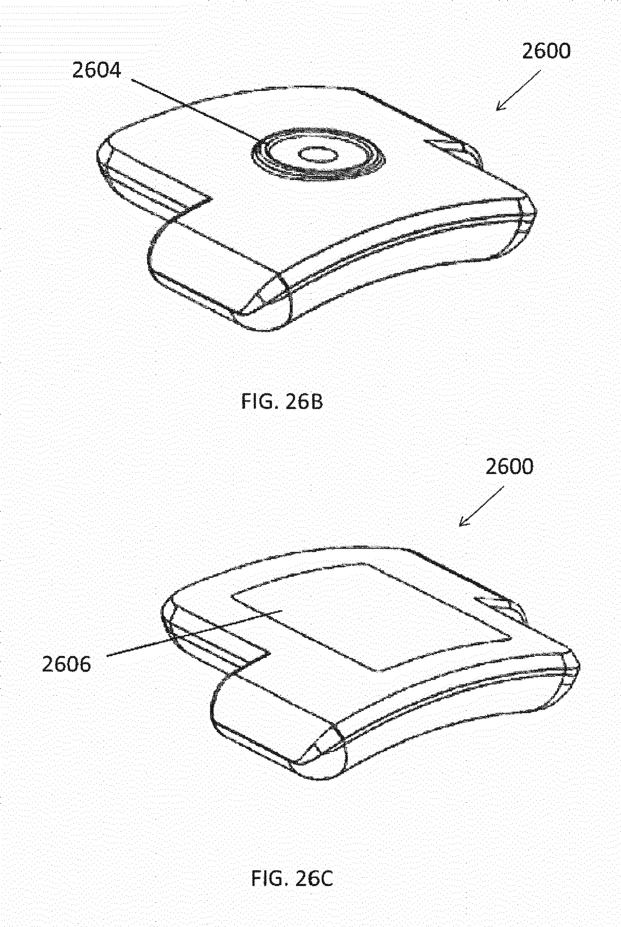

FIGS. 26A, 26B, and 26C illustrate various embodiments of a casing for peripheral modules. The peripheral module 2600 can be a heart rate monitor 2602, with an opening in the lower part for taking biometric measurements from the user. The module 2600 can be a microphone, with openings for capturing audio and for noise cancellation. The module 2600 can be a camera 2604, with a lens installed on the surface of the module casing for capturing images and/or video. The module 2600 can also be a reprogrammable button 2606, an extra battery, or contain a GSM unit for inputting SIM cards. Based on the cost, size and popularity of certain electronic components, multiple features may potentially be assembled into one module. All electronic components are mounted on their own PCBs, which are assembled in the modules and wired to the male and female ports.

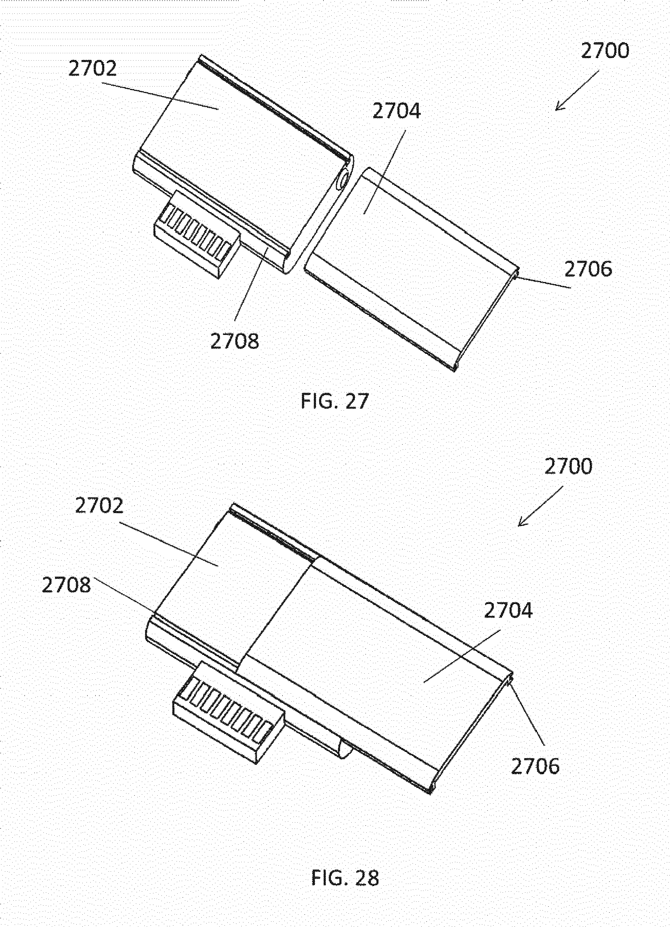

FIGS. 27 and 28 illustrate a modular wearable smart band module 2700 packaged in casings that are composed of two parts. In the bottom casing 2702, the electronics of the module relevant to its intended function (including but not limited to a GPS, heart rate monitor, or extra battery) can be installed, and sealed completely against water and other contaminants using an inner layer that can be adhesively bonded (or other chemical bonding) to the bottom casing. The bottom casing 2702 also contains the male and female connector elements and ports. The top casing 2704, shell or facia, can be the second part of the module 2700, and is installed on the bottom casing 2702 using a temporary connection method. This method can include a tongue 2706 and groove 2708 such that the shell can be installed by aligning it with slots on the bottom casing and sliding it across the grooves to fix it in place. In at least one embodiment, the shell 2704 can retain a coupling arrangement to receive a second shell disposed over and coupled with the first shell.

The connection point can be on the top surface of the bottom casing 2702, or on the sides of the bottom casing 2702 if the top shell is designed to enclose the sides of the module as well. The connection can be any other similar method that is comprised of a rail that the shell 2704 can be slid over and subsequently locked to, mechanically using a press fit at the end of the rail or using a spring loaded mechanism, or magnetically (permanent of electromagnet), or both. In using such methods, shells can only be removable when modules have been disconnected and are isolated from the modular wearable smart band. When connected, the proximity of two modules prevents their shells from being removed.

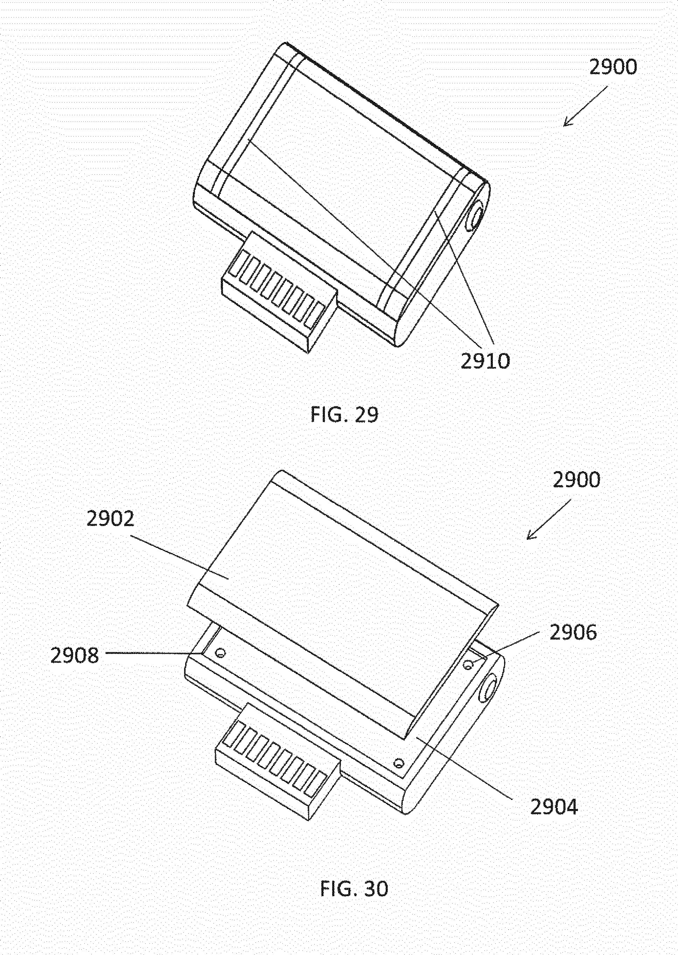

FIG. 30 illustrates a modular casing 2900 having a shell 2902 installed on the bottom casing 2904 using fasteners 2906 including but not limited to screws. The shell 2902 can be positioned vertically onto the bottom casing 2904, and the screws 2906 (held captive in the bottom casing) are fastened to fix both parts together.

As can be appreciated in FIGS. 29 and 30, the bottom casing 2904 can have an O-ring 2908 or other similar sealing structure assembled around its inner perimeter that abuts the shell 2902 and is compressed as the shell 2902 is fixed onto the bottom casing 2904 using the screws, sealing the module. Shells 2902 for the core module of the smart band can be installed using such a method. Shell 2902 can also implement integrated antennae 2910 configured to couple with the peripheral module and increase external propagation from the module 2900.

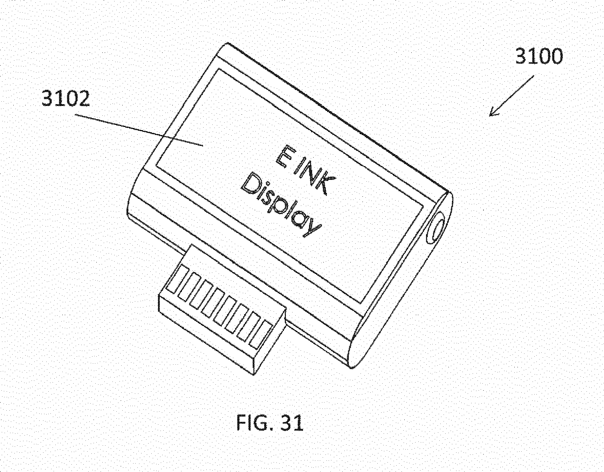

FIG. 31 illustrates a module 3100 of a modular wearable smart band having a display 3102 thereon. Shells can have openings for modules with functionalities that include sensors protruding from their casing such as (but not limited to) camera and LED torch modules (see FIG 26A, FIG. 26B, and FIG. 26C). Shells can also be active or passive. Active shells can be electrically coupled with electronics disposed in the bottom casing using mating contact pads that align when the shell is installed on the bottom casing. Active shells have the capability of extending the antennae of relevant modules such as GPS or GSM modules. Laser direct structuring (LDS) can be used to implement antennae on the internal or external surfaces of the shells 2910. Active shells can also form additional displays 3102 for the wearable smart band through the implementation of thin display technologies such as but not limited to Electronic Ink (E Ink) displays 3102 on their surfaces. These shells can be electrically coupled to the bottom casing using mating contact pads that align when the shell is installed on the bottom casing. The shells can display notifications or other information as set by the user, or have a purely aesthetic function through customisable images. Active shells have additional sealing structures around the perimeter of their inner surface to prevent the contact pads from being exposed to water and other contaminants.

Shells can be interchangeable and can be replaced over the entire expected lifetime of the device. Interchangeable shells enable users to completely personalize their modular wearable smart band in terms of functionality and appearance. Shells can be available in multiple materials including metals, plastics and organic materials such as wood. Varieties of colours and finishes for these materials can also be available, each interchangeably compatible with the bottom casings of the modules. The connection method between the shell and bottom casing is designed such that it can sustain regular usage by the user under normal circumstances, and under accidental occurrences such as snags or drops of the module or complete smart band. A user can have more than one shell coupled with each module at any given time, and swap the order of the shells to display the material, color, or features of the outermost shell. This arrangement can prevent a user from carrying and keeping track of shell casings when not being used.

### CORE MODULES

FIGS. 32-35 illustrate various embodiments of core modules and related peripheral modules forming a smart band device. The core module can be a centrepiece of a smart band providing central processing power and in some instance display capabilities. The core module can be communicatively coupled with one or more peripheral modules to expand the functionality of the smart band device.

FIGS. 32A, 32B, and 32C illustrate example embodiments of a core module 3200. The core module 3200 can implement the same features and design technology as the peripheral modules with regards to the aesthetics, engineering design, the locking mechanism, water resistance and the material choice. The core module 3200 can have a first connection port 3206 and a second connection port 3208 on opposing sides to provide coupling with adjacent modules.

The core module 3200 can be larger than the peripheral modules, and includes a microcontroller, and optionally can include a display and a battery, as well as sensors or antennae. The microcontroller will contain a CPU, memory, and other appropriate electronic elements. The microcontroller can contain wireless communication technologies, such as Bluetooth that enables connectivity to other compatible devices such as the user's smartphone, tablet, or other electronic device and/or Wi-Fi that enables connectivity to a wireless network for internet access. The microcontroller can also contain a vibration element to alert the user of any notifications including phone calls, emails and low battery levels. The core module 3200 can also have an integrated microphone for making phone calls and using voice commands, as well as an accelerometer for simple gesture controls and for fitness tracking applications. The core module 3200 can also have single or multiple buttons, a rotating dial or a slider switch (spring-loaded or otherwise), or a combination, to enable the user to interact with the device. The core module 3200 can have an NFC chip that provides, but is not limited to quick pairing with an NFC-enabled device such as the user's smartphone.

Applications for interacting with the peripheral modules can be installed on the core module 3200, either from the device itself, or through the user's connected electronic device, such as a smartphone. The core module and connected peripheral modules of the device transfer data, clock signals and power to each other. The processor of the core module sends requests to the connected peripheral modules, which then respond by carrying out a requested function, and transferring the relevant data back to the processor. For core modules that contain a display, the processor then sends data to it for visual feedback to the user. The processor can also send the data to the user's personal device, connected via Bluetooth, Wi-Fi, or via a physical connection if available.

The connected core module 3200 and peripheral modules do not need to form a complete closed electronic circuit. The device would still operate if it is opened up flat with the modules connected together, or if it is closed on the wrist with one non-electronic component between the electronic modules, such as a clasp. The core module can also be used independently, with no peripheral modules connected. The core module can be secured to the wrist by connecting sufficient spacer modules to the core module. Strap modules may also be available for securing the core module to the user's wrist without the need for peripheral modules. Such straps would connect to the core using the relevant proprietary connector. The material of the strap can be machinable or formable, and has sufficient strength such that it can endure repeated loading and unloading during normal usage without breaking. The material can be non-porous, water resistant and able to survive in normal environmental conditions.

Core modules 3200 can have different display types, shapes and sizes. The display can be a rectangular display 3202 capable of displaying colour or monochrome and operating as a touch or non-touch screen. As can be appreciated in FIG. 32B, the rectangular display can have a curved outer surface. As can be appreciated in FIG. 32C, the display can be a circular 3204 capable of displaying colour or monochrome and operating as a touch or non-touch screen. The display 3202, 3204 can use TFT, LCD, or LED (and its variants) technology. The display can be a touch or non-touch electronic paper display. The display 3202, 3204 can also be a simple LED screen with minimal functions. The choice of core module 3200 and hence display will be up to the discretion of the user, and will be based on their functional and battery life requirements from the device.

The microcontroller in the core module 3200 can depend on the display. Core modules 3200 can have no display, for which a low processing power microcontroller would be appropriate. This arrangement would be able to handle the processing of data from sensor peripheral modules, which would be communicated via Bluetooth or Wi-Fi to the user's smartphone or other personal devices for viewing purposes.

Core modules 3200 with a monochrome display, simple LED or electronic paper display can contain a medium processing power microcontroller, for more complex data handling, displaying menus and enabling a streamlined interface for the user.

Core modules 3200 with a colour touch or non-touch screen can contain a high processing power microcontroller, for high end functions such as making and receiving calls, image processing and enabling a feature-rich interface for the user. The peripheral modules can work with any of the core modules, with varying levels of functionality.

Core modules 3200 can be available with an integrated battery and a battery management circuit. The battery type can be lithium-ion, lithium ion polymer, nickel-metal hydride, or any other type suitable for a wearable device that offers sufficient battery life and a minimal charging time for the user. The battery life of the device can be extended by connecting additional battery peripheral modules to the core module, which would each contain their own management circuits to integrate them with the rest of the modules on the device. The core module can have one or more charging ports, such as in the form of an array of flat electrical contacts that magnetically connect to a charging cable, or in the form of a USB port. The core module may also have the required components to enable inductive charging. The battery can also be charged from the connector that enables the connection between modules, when the core module is disconnected from the rest of the peripheral modules.

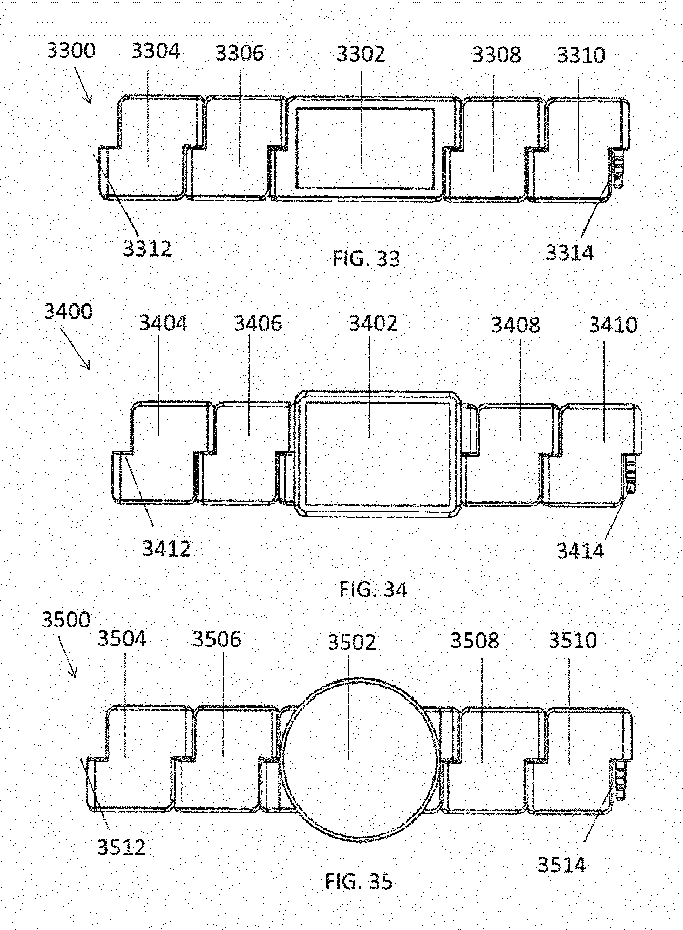

FIGS. 33-35 illustrate various embodiment of a core module coupled with a plurality of peripheral modules. As can be appreciated in FIGS. 33-35, the smart band can have a first connection port 3312, 3412, 3512 on one end and a second connection port 3314, 3414, 3514 on an opposing end. The first and second connection port can couple with adjacent modules or couple to each other to provide a continuous loop.

As can be appreciated in FIG. 33, a user interested in fitness tracking can acquire a core module 3302 that contains a simple LED display to prolong battery life and ensure good visibility outdoors. A motion module containing an accelerometer, gyroscope and magnetometer for more accurate motion detection to track daily activity 3304, a GPS module for route tracking and pace calculations 3306, an MP3 module for listening to music on the go 3308, and an infrared heart rate monitor module for measuring pulse 3310 can be connected as peripheral modules to build the ultimate personal trainer.

As can be appreciated in FIG. 34, a user interested in hiking can acquire a core module 3402 that contains an electronic paper display to prolong battery life and ensure good visibility outdoors. Extra battery modules to maximise the device's life 3404, 3406, an environment module for monitoring surroundings 3408, and a GPS module 3410 for mapping can be connected as peripheral modules to build the ultimate hiker's companion.

As can be appreciated in FIG. 35, a user interested in business-centric applications can acquire a core module 3502 that contains a colour touch screen LCD display for managing notifications more efficiently. A contactless module with NFC/RFID chips for swift access and payment authorisation 3504, a SIM card module for enabling GSM connectivity 3506, a flash memory module 3508, and a fingerprint module for extra security 3510, can be connected as peripheral modules to build the ultimate personal assistant.

While FIGS. 33-35 illustrate various combinations of core modules and peripheral modules, the examples are merely illustrative and it should be appreciated that any combination of core modules and peripheral modules can be implemented.

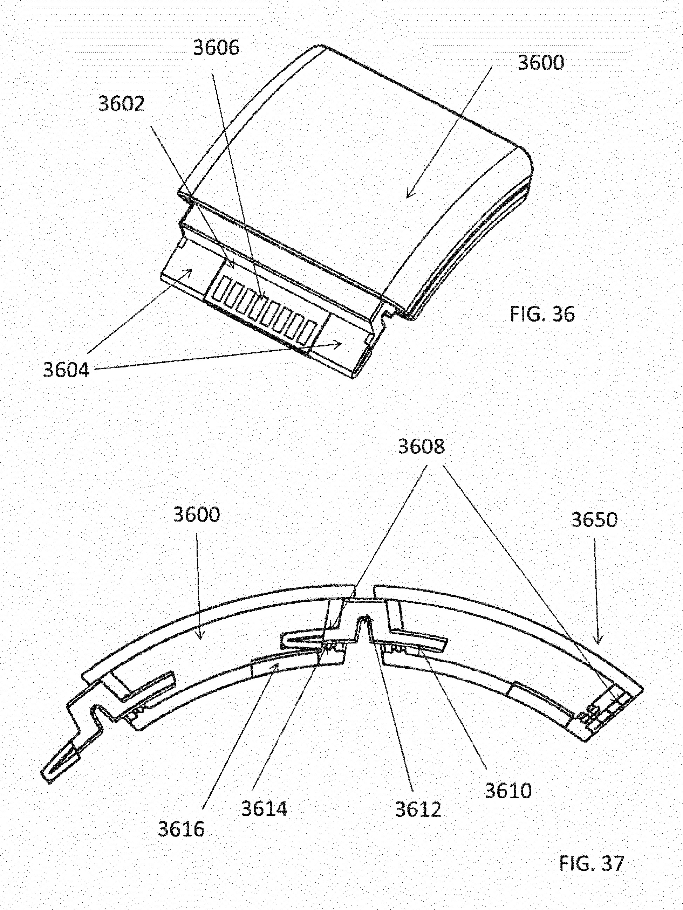

FIGS. 36 and 37 illustrate another embodiment for communicatively coupling two adjacent modules. The mechanical and electrical connector can be combined into a single connector is shown in FIGS. 36 and 37, with a single action required for coupling. A module 3600 can have an electrical element with a FPC 3602, while the mechanical element can be two strips of sprung metal, one either side 3604 of the FPC 3602. The connector can be constructed as a single piece with exposed contacts 3606 at one end that can be connected into the female port 3608 of an adjacent module 3650, and another end that is fixed permanently to the module and electrically coupled to the PCB of the module using an array of spring contacts 3610 or otherwise. The connector can be constructed with a bend at flex point 3612 for improved durability while also enabling modules to bend about each other. The strips of metal not only enable modules to be connected mechanically but also strengthen the connector structure as a whole. When the connector is inserted into an adjacent module, the sprung metal at the end of the connector is compressed to fit in through its input hole (which has a smaller height than the metal's uncompressed height). The input hole has an interior lip 3614 on the inside surface configured to engage the spring metal. Once fully inserted, the contacts of the connector align with contacts of the module PCB into which it has been connected, and the sprung metal relaxes to its original shape and engages the interior lip 3614, and the connected modules cannot be pulled apart as the sprung metal motion is restricted by the interior of the module casing. To release the modules, a soft push button 3616 on the bottom of the module needs to be pressed, compressing the sprung metal again such that it can fit through its input hole and be removed.

It is believed the exemplary embodiment and its advantages will be understood from the foregoing description, and it will be apparent that various changes may be made thereto without departing from the spirit and scope of the disclosure or sacrificing all of its advantages, the examples hereinbefore described merely being preferred or exemplary embodiments of the disclosure.

In the following, further examples are mentioned.
Example 1: A modular smart band comprising:
   a plurality of modules coupled one to the other, the plurality of modules comprising:
      at least one core module having at least one processor; and
      at least one peripheral module;
   wherein each of the plurality of modules has a coupler end and a receiving end disposed opposing ends, the coupler end configured to be received in the receiving end of an adjacent module;
   wherein at least one of the plurality of modules includes a display and at least one the plurality of modules includes a battery.
Example 2: The modular smart band of claim 1, wherein each of the plurality of modules can receive a removable outer facia, the removable outer facia configured to be interchangeably coupleable with each of the plurality of modules.
Example 3: The modular smart band of claim 1 or 2, wherein the plurality of modules includes a core module, and one or more peripheral modules each coupled one to the other forming a continuous loop.
Example 4: The modular smart band of claim 1, 2 or 3, wherein the at least one core module includes a touch sensitive display.
Example 5: The modular smart band of claim 1, 2, 3 or 4, wherein at least one peripheral module is a battery configured to supply electrical power to the at least one core module and at least one peripheral module.
Example 6: The modular smart band of any preceding claim, wherein the battery is coupled to a kinetic energy generator, the battery configured to be charged by the kinetic energy generator.
Example 7: The modular smart band of any preceding claim, wherein the plurality of modules includes wireless communication, the wireless communication configured to be coupled to an electronic device.
Example 8: A modular smart band comprising:
   a plurality of communicatively coupled modules, the plurality of modules comprising:
      at least one module having at least one processor; and
   wherein each of the plurality of modules has a first end and a second end disposed opposing ends, the first end configured to couple with the second end of an adjacent module.
Example 9: The modular smart band of claim 8, wherein the plurality of modules comprises at least one core module and at least one peripheral module, wherein the core module has a processor and a display.
Example 10: The modular smart band of claim 9, wherein the at least one core module has a first size and the at least one peripheral module has a second size, the first size being larger than the second size.
Example 11: The modular smart band of claim 8, 9 or 10, wherein each of the plurality of modules can receive a removable outer facia.
Example 12: The modular smart band of claim 8, 9, 10 or 11, wherein the plurality of modules are coupleable by snap connection, the first end having a protrusion configured to snap fit into a groove formed on the second end of an adjacent module.
Example 13: The modular smart band of claim 8, 9, 10 or 11, wherein the plurality of modules are coupleable by a sliding connection, wherein the first end has a protrusion configured for sliding engagement with a correspondingly shaped groove formed on the second end.
Example 14: The modular smart band of any one of claims 8 to 13, wherein the plurality of modules are electrically coupled by a first electrode disposed at one of the opposing ends and a second electrode at the other of the opposing ends of an adjacent module, the first electrode configured to abuttingly engage the second electrode, thereby electrically coupling between the plurality of modules.
Example 15: The modular smart band of claim 8, 9, 10, 11, 13 or 14, wherein the plurality of modules are coupleable by a pin disposed on the first end and an aperture formed on the second end configured to receive and engage the pin.
Example 16: The modular smart band of any one of claims 8 to 15, wherein the plurality of modules have a connector extending from the first end and a connector port formed in the second end configured to receive the connector of an adjacent module.
Example 17: The modular smart band of claim 16, wherein the first has at least one arm extending parallel to the connector and configured to be engaged within a slot formed on the second end of an adjacent module.
Example 18: The modular smart band of claim 17, wherein the at least one arm has a locking portion formed thereon configured to engage with a corresponding locking portion in the slot formed on the adjacent module.
Example 19: The modular smart band of claim 18, wherein the plurality of modules have a release mechanism configured to disengage the locking portion from the corresponding locking portion, thereby decoupling the module from the adjacent module.
Example 20: The modular smart band of any one of claims 16 to 19, wherein the connector has at least one electrode disposed thereon and configured to engage a corresponding electrode disposed within the connector port.

## Claims

1. A modular smart band comprising:
a plurality of communicatively coupled modules, the plurality of modules comprising:
at least one module having at least one processor; and
wherein each of the plurality of modules has a first end and a second end disposed at opposing ends, the first end configured to couple with the second end of an adjacent module.

2. The modular smart band of claim 1, wherein the plurality of modules comprises at least one core module and at least one peripheral module, wherein the core module has a processor and a display.

3. The modular smart band of claim 2, wherein the at least one core module has a first size and the at least one peripheral module has a second size, the first size being larger than the second size.

4. The modular smart band of claim 1, 2, or 3, wherein each of the plurality of modules can receive a removable outer facia.

5. The modular smart band of claim 1, 2, 3 or 4, wherein the plurality of modules are coupleable by snap connection, the first end having a protrusion configured to snap fit into a groove formed on the second end of an adjacent module.

6. The modular smart band of claim 1, 2, 3 or 4, wherein the plurality of modules are coupleable by a sliding connection, wherein the first end has a protrusion configured for sliding engagement with a correspondingly shaped groove formed on the second end.

7. The modular smart band of any one of claims 1 to 6, wherein the plurality of modules are electrically coupled by a first electrode disposed at one of the opposing ends and a second electrode at the other of the opposing ends of an adjacent module, the first electrode configured to abuttingly engage the second electrode, thereby electrically coupling between the plurality of modules.

8. The modular smart band of claim 1, 2, 3, 4, 5, or 6, wherein the plurality of modules are coupleable by a pin disposed on the first end and an aperture formed on the second end configured to receive and engage the pin.

9. The modular smart band of any one of claims 1 to 7, wherein the plurality of modules have a connector extending from the first end and a connector port formed in the second end configured to receive the connector of an adjacent module.

10. The modular smart band of claim 9, wherein the first end has at least one arm extending parallel to the connector and configured to be engaged within a slot formed on the second end of an adjacent module.

11. The modular smart band of claim 10, wherein the at least one arm has a locking portion formed thereon configured to engage with a corresponding locking portion in the slot formed on the adjacent module.

12. The modular smart band of claim 11, wherein the plurality of modules have a release mechanism configured to disengage the locking portion from the corresponding locking portion, thereby decoupling the module from the adjacent module.

13. The modular smart band of any one of claims 9 to 12, wherein the connector has at least one electrode disposed thereon and configured to engage a corresponding electrode disposed within the connector port.

14. The modular smart band of any one of claims 1 to 13, wherein at least a first module of the plurality of modules includes a display and at least a second module of the plurality of modules, different from the first module, includes a battery, wherein the battery is coupled to a kinetic energy generator and is configured to be charged by the kinetic energy generator.
